# EUROPÄISCHE PATENTSCHRIFT

(11) **EP 2 502 054 B1**
(45) Veröffentlichungstag und Bekanntmachung des Hinweises auf die Patenterteilung: **25.02.2015**
(21) Anmeldenummer: 10776754.3
(22) Anmeldetag: 18.11.2010
(51) Int. Cl.: G01N 21/31, G01N 21/84

(54) **VERFAHREN UND VORRICHTUNG ZUR UNTERSUCHUNG EINER KÖRPERFLÜSSIGKEIT**
METHOD AND DEVICE FOR INSPECTING A BODILY FLUID
PROCÉDÉ ET DISPOSITIF DESTINÉS À L'EXAMEN D'UN LIQUIDE CORPOREL

(30) Priorität: 18.11.2009 EP 09176330
(43) Veröffentlichungstag der Anmeldung: 26.09.2012
(73) Patentinhaber: Roche Diagnostics GmbH, 68305 Mannheim (DE); F.Hoffmann-La Roche AG, 4070 Basel (CH)
(72) Erfinder: HARTTIG, Herbert, 67434 Neustadt (DE); HAAR, Hans-Peter, 69168 Wiesloch (DE); WERNER, Gerhard, 69469 Weinheim (DE)
(74) Vertreter: Pfiz, Thomas
(86) Internationale Anmeldenummer: PCT/EP2010/067758
(87) Internationale Veröffentlichungsnummer: WO 2011/061257

(56) Entgegenhaltungen:
- EP-A1- 1 275 964
- EP-A1- 1 447 658
- EP-A1- 1 911 394
- EP-A1- 1 921 441
- WO-A1-00/19185
- WO-A1-2007/045412
- WO-A1-2008/145628
- WO-A2-2006/019543

## Beschreibung

Die Erfindung betrifft ein Verfahren zur Untersuchung einer Körperflüssigkeit, insbesondere für eine Blutzuckerbestimmung, bei welchem ein Testelement zum Einmalgebrauch in einem Testgerät mit Körperflüssigkeit beaufschlagt wird und über ein optisches Übertragungssystem an eine photometrische Messeinheit optisch angekoppelt wird, wobei nach dem Aufbringen der Körperflüssigkeit ein zeitlicher Verlauf von Messwerten zum Nachweis eines Inhaltsstoffs der Körperflüssigkeit an dem Testelement erfasst wird. Die Erfindung betrifft weiter ein entsprechendes Testsystem.

In der Praxis für Blutzuckerbestimmungen bekannte Verfahren dieser Art basieren auf Teststreifen, die als irreversibel reagierender optischer Einmalsensor aufgebaut sind. Diese sollen es durch Verarbeitung in automatischen Testgeräten auch dem Laien ermöglichen, die Messung von Blutglukose mit hinreichender Genauigkeit auszuführen, wie sie die medizinische Behandlung der mannigfaltigen Formen von Diabetes erfordert. Insbesondere bei Diabetes Typ 1 und auch Typ 2, soweit mit Insulin therapiert, ist die Qualität der Messung von besonderer Bedeutung. Der Messablauf sieht vor, dass nach Aufbringen einer Blutprobe auf den Teststreifen die Analytkonzentration durch wiederholte photometrische Messungen ermittelt wird. Dabei ist es wichtig, dass das disposable Reagenzträgersystem während des gesamten Abtastvorgangs z.B. über 4 bis 10 Sekunden nicht bewegt wird, um die Messung nicht zu stören.

Im Stand der Tecknik sind Verfahren und Vorrichtungen zur Messung von Blutglukose umfassend beschrieben, beispielsweise in den Dokumenten EP-1 921 441 A1 oder WO-2007/045412 A1.

Ausgehend hiervon liegt der Erfindung die Aufgabe zugrunde, die im Stand der Technik bekannten Verfahren und Vorrichtungen und insbesondere die Qualität und Genauigkeit des Messprozesses weiter zu verbessern, wobei auch der apparative Aufwand begrenzt und dabei für ein kompaktes System außerhalb einer Laborumgebung angemessen sein soll.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch eine Kontrollmessung eine Zusatzinformation über die optische Übertragungsstrecke zwischen dem Testdisposable bzw. Testfeld und der reflexionsphotometrischen Messeinheit zu gewinnen. Dementsprechend wird erfindungsgemäß vorgeschlagen, dass das Übertragungsverhalten des optischen Übertragungssystems durch eine Messwerterfassung bei zwei verschiedenen Messwellenlängen kontrolliert wird. Damit ist es möglich, den Zustand der opto-mechanischen Ankopplung des Testelements im Zuge des Messvorgangs zu überwachen, so dass die Gültigkeit und Genauigkeit des Ergebnisses noch besser gewährleistet werden kann. Vorteilhaft kann damit das Übertragungsverhalten eines in dem Testelement integrierten Optikelements, insbesondere einer Lichtleiter-Schnittstelle kontrolliert werden. Dies ist vor allem auch bei solchen Systemen wichtig, die mit geringen Probenmengen arbeiten und dabei relativ kleine Abmessungen im Bereich der optischen Ankopplung aufweisen, wie sie beispielsweise durch den Querschnitt von Lichtleitern gegeben sind.

Vorteilhafterweise wird aus einem wellenlängenabhängigen Vergleich der Messwerte ein Unterschied im Übertragungsverhalten des optischen Übertragungssystems vor und nach dem Aufbringen der Körperflüssigkeit ermittelt, wobei nach Maßgabe des ermittelten Unterschieds eine Messwertkorrektur durchgeführt oder das Testergebnis verworfen wird. Dabei wird nach dem Aufbringen der Körperflüssigkeitsprobe bei beiden Messwellenlängen ein mit Körperflüssigkeit benetzter Bereich optisch abgetastet.

Eine weitere vorteilhafte Ausführung sieht vor, dass die beiden Messwellenlängen in einem für den Nachweis des Inhaltsstoffs sensitiven bzw. nutzbaren Absorptionsbereich des Testelements vorzugsweise nicht mehr als 50nm entfernt voneinander liegen. Durch eine solche schmalbandig aufgelöste Anregung kann sichergestellt werden, dass das Übertragungssystem bei beiden Messwellenlängen im Wesentlichen dieselben optischen Eigenschaften besitzt.

Denkbar ist es aber auch, dass eine Messwellenlänge in einem für Nachweis des Inhaltsstoffs nutzbaren Absorptionsbereich des Testelements liegt und die andere Messwellenlänge gleichsam als Matrixwert in einem nichtsensitiven Bereich außerhalb davon. Durch den von dem Inhaltsstoff bzw. Analyt unabhängigen Matrixwert ist es möglich, optische Störungen unbeeinflusst von dem Reaktionssystem für den Nachweis zu kontrollieren. Andererseits muss aber hingenommen werden, dass wellenlängenabhängige Störeinflüsse asymmetrisch in beiden Messkanälen zum Tragen kommen können.

Um noch vor dem Probenauftrag eine Zustandsinformation zu gewinnen, ist es von Vorteil, wenn durch eine Messung vor dem Aufbringen der Körperflüssigkeit auf das Testelement ein Trockenleerwert als Maß für das anfängliche Übertragungsverhalten des optischen Übertragungssystems erfasst wird.

Eine weitere Verbesserung sieht vor, dass aus dem Zeitverlauf der Messwerte bei den beiden Messwellenlängen ein Referenzwert für das Übertragungsverhalten des optischen Übertragungssystems zu einem Startzeitpunkt nach dem Aufbringen der Körperflüssigkeit extrapoliert wird. Hierbei ist es auch vorteilhaft, wenn der Referenzwert bei Unterschreiten einer vorgegebenen maximalen Toleranzabweichung von dem Trockenleerwert zur Offset-Korrektur der Messwerte herangezogen wird.

Zur weiteren Steigerung der Messgenauigkeit können die wellenlängenabhängig erfassten Messwerte vorzugsweise durch Verhältnisbildung miteinander korreliert werden, so dass bei beiden Messwellenlängen einwirkende Störungen eliminiert werden.

Um einen direkten Bezug zwischen beiden Messkanälen herstellen zu können, ist es vorteilhaft, wenn die Messwerte über eine vorgegebene Messdauer intervallweise bei beiden Messwellenlängen im Wesentlichen zeitgleich erfasst werden.

Auch hinsichtlich einer apparativen Vereinfachung ist es von besonderem Vorteil, wenn die Messwellenlängen durch Einstrahlung von spektral aufgelöstem Anregungslicht vorzugsweise mittels Leuchtdioden definiert werden. Auf diese Weise kann auf aufwändige Filtersysteme im Strahlengang verzichtet werden.

Der Einsatz der Zweiwellenlängenmessung ist besonders in einer solchen Messumgebung günstig, in der im Zuge des Aufbringens der Körperflüssigkeit auf das Testelement mindestens ein Teil des optischen Übertragungssystems bewegt und/oder verformt wird.

Im Hinblick auf ein Messsystem wird zur Lösung der eingangs genannte Aufgabe vorgeschlagen, dass die Messeinheit dazu eingerichtet ist, das Übertragungsverhalten des optischen Übertragungssystems durch eine Messwerterfassung bei zwei verschiedenen Messwellenlängen zu kontrollieren. Hierbei ergeben sich die bereits in verfahrensmäßiger Hinsicht oben angeführten Vorteile gleichermaßen.

Im Hinblick auf die räumliche Trennung zwischen Messort und Probenapplikationsstelle ist es vorteilhaft, wenn das optische Übertragungssystem mindestens einen in dem Testgerät und/oder in dem Testelement integrierten Lichtleiter umfasst.

Vorteilhafterweise besitzt das optische Übertragungssystem eine opto-mechanische Kopplungseinrichtung zur geräteseitigen Halterung und gleichzeitigen optischen Ankopplung des Testelements. Dies ist besonders dann von Vorteil, wenn das Testelement ein über eine optische Schnittstelle ankoppelbares Optikelement, insbesondere einen integrierten Lichtleiter als Teil des optischen Übertragungssystems aufweist.

Eine weitere Verbesserung lässt sich dadurch erreichen, dass die Messeinheit einen als Doppelstrahler bei zwei Messwellenlängen emittierenden Lichtsender aufweist.Dabei ist es vorteilhaft, wenn ein Strahlkombinator das von dem Lichtsender vorzugsweise mittels zwei diskreten Leuchtdioden ausgestrahlte Anregungslicht einheitlich bündelt. Bevorzugt emittiert der Lichtsender die beiden Messwellenlängen gleichzeitig. Das optische Übertragungssystem ist auf eine Probenmesszone ausgerichtet, die nach dem Probenauftrag einheitlich mit Körperflüssigkeit benetzt ist, so dass bei beiden Messwellenlängen ein Nasswert erfasst wird.

Im Folgenden wird die Erfindung anhand der in der Zeichnung schematisch dargestellten Ausführungsbeispiele näher erläutert. Es zeigen
- Fig. 1: ein Testsystem zur Blutzuckermessung mit einem Handgerät und einem darin eingesetzten Teststreifen in schaubildlicher Darstellung;
- Fig. 2: eine photometrische Messeinheit mit einem optischen Übertragungssystem für eine Zweiwellenlängenmessung an dem Teststreifen in Draufsicht;
- Fig. 3: einen Strahlkombinator zur gleichmäßigen Einspeisung des Anregungslichts in perspektivischer Ansicht;
- Fig. 4: ein Diagramm einer Absorptionsbande des mit Blut benetzten Teststreifens bei verschiedenen Blutzuckerkonzentrationen;
- Fig. 5: einen Zeitverlauf von Remissions-Messwerten bei zwei Blutzuckerkonzentrationen und jeweils zwei Messwellenlängen.

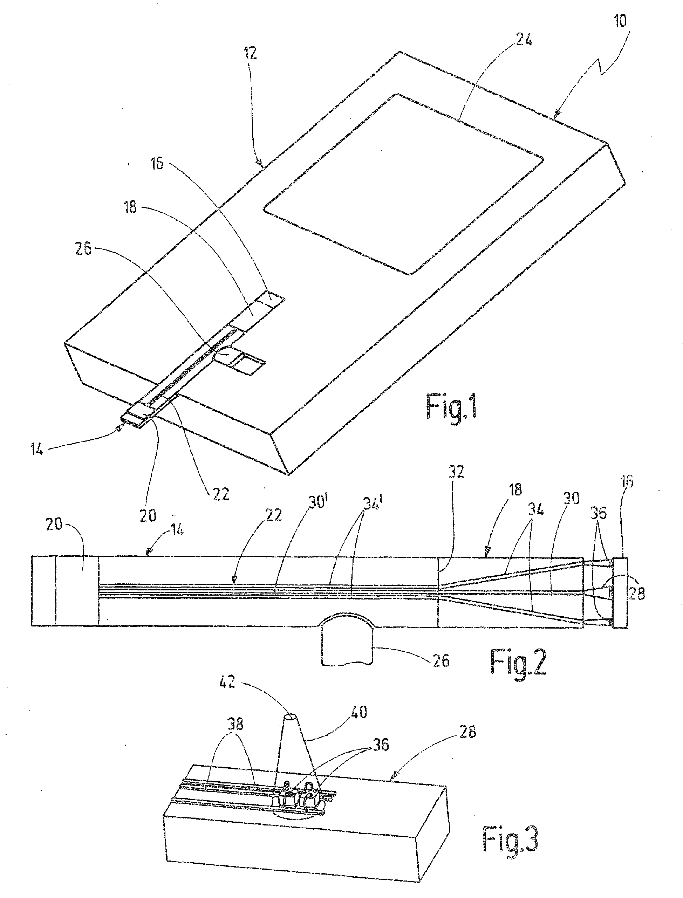

Das in Fig. 1 dargestellte Testsystem 10 umfasst ein tragbares Testgerät 12 und darin einsetzbare Testelemente 14 für jeweils einen Einmaltest an einer Flüssigprobe, speziell zur Glukosebestimmung in einer Blutprobe. Zu diesem Zweck weist das Testgerät 12 eine photometrische Messeinheit 16 und ein optisches Übertragungssystem 18 zur optischen Ankopplung des aktiv eingesetzten Testelements 14 auf, wobei das Testelement 14 in Form eines Teststreifens mit einem trockenchemischen Testfeld 20 und einer darauf ausgerichteten Lichtleiteranordnung 22 als Teil des Übertragungssystems 18 ausgebildet ist. Um Zustandsänderungen der optischen Ankopplung zu erkennen und das Übertragungsverhalten des Übertragungssystems 18 zu überprüfen, ist die Messeinheit 16 dazu eingerichtet, die Messwerte paarweise bei zwei verschiedenen Messwellenlängen zu erfassen. Das daraus ermittelte Messergebnis kann beispielsweise in Form einer digitalen Konzentrationsangabe auf dem Display 24 dargestellt werden.

Das in Gebrauch befindliche Testelement 14 kann unter gleichzeitiger Herstellung der optischen Verbindung mechanisch beispielsweise über eine formschlüssige Kopplungseinheit 26 an das Testgerät angedockt werden.

Für einen Einmaltest kann das Testfeld 20 von einem Benutzer mit einer geringen Menge an Kapillarblut beaufschlagt werden, die in einer trockenchemischen Reagenzschicht aufgenommen wird und in Abhängigkeit von der Glukosekonzentration durch eine an sich bekannte enzymselektive Reaktion zu einer photometrisch messbaren Farbänderung führt.

Zweckmäßig werden die Testelemente 14 aus einem nicht gezeigten Magazin für den Benutzer bereitgestellt und gegebenenfalls entsorgt. Grundsätzlich ist es möglich, dass hierfür ein Testband zum Einsatz kommt, wobei die darauf befindlichen Testfelder durch Bandtransport positioniert werden. Denkbar ist auch der Einsatz integrierter Testelemente, welche die Probengewinnung, Applikation auf das Testfeld und optische Ankopplung in einem automatischen Bewegungsablauf vereinen, wie es in der Patentanmeldung EP-2 248 463 A1 beschrieben ist, worauf hier Bezug genommen wird. Neben der Blutzuckerbestimmung kommen auch andere Untersuchungen von Zielanalyten in einer Körperflüssigkeit, beispielsweise Gewebeflüssigkeit in Frage.

Allen diesen Systemen gemeinsam ist, dass durch eine geräteseitige Aktuation oder benutzerseitige Eingriffe im Zuge der Bereitstellung des Testelements die Randbedingungen für die Messung unbeabsichtigt veränderlich sind. Beispielsweise kann der Probenauftrag durch Andrücken eines Körperteils auf das Testfeld 20 zu einer ungewollten Verformung oder Verschiebung des Übertragungssystems 18 führen. Hinzu kommt, dass die Erfassung der Messwerte zum Startzeitpunkt der Probenapplikation unsicher bzw. ungenau ist, weil die Testfeldbenetzung nicht schlagartig homogen erfolgt und die optischen Eigenschaften sich ändern. Um hier Abhilfe zu schaffen, kann durch die weiter unten näher erläuterte Zweiwellenlängenmessung die erforderliche Messgenauigkeit und Robustheit gegen Störungen insbesondere des opto-mechanischen Anschlusses mit geringem apparativem Aufwand sichergestellt werden.

Fig. 2 veranschaulicht den optischen Übertragungsweg bzw. Strahlengang zwischen der Messeinheit 16 und dem Testfeld 20 des angedockten Testelements 14. Ein als Doppelstrahler gleichzeitig bei zwei verschiedenen Messwellenlängen emittierender Lichtsender 28 strahlt das Anregungslicht in einen zentralen Lichtleiter 30 des optischen Übertragungssystems 18 ein. Über die optische Schnittstelle 32 wird das Anregungslicht in den mittleren Lichtleiter 30' der im Testelement integrierten Lichtleiteranordnung 22 übertragen und an deren freiem Ende nach oben auf die Rückseite des Testfelds 20 reflektiert bzw. gestreut. Das von dem Testfeld 20 remittierte Messlicht gelangt über die äußeren Lichtleiter 34', 34 auf die Lichtempfänger 36 der Messeinheit, wobei durch die beiden Empfangskanäle auch eine Benetzungskontrolle des Testfelds 20 möglich ist. Durch die mechanische Kopplungseinheit 26 soll neben der lagerichtigen Positionierung des Testelements 14 an der Schnittstelle 32 auch eine zuverlässige optische Verbindung geschaffen bzw. aufrechterhalten werden.

Wie aus Fig. 3 ersichtlich, kann der Lichtsender 28 durch zwei Leuchtdioden 36 verwirklicht werden, die über getrennte Strompfade 38 gesondert ansteuerbar sind. Die nahezu monochrom bei voneinander verschiedenen Wellenlängen und somit spektral aufgelöst emittierenden Leuchtdioden 36 sind in einen Reflektorkegel 40 aus einem transparenten Kunststoff eingebettet, der somit als Strahlkombinator das ausgestrahlte Licht einheitlich und gleichmäßig durchmischt auf den Austrittsquerschnitt 42 bündelt.

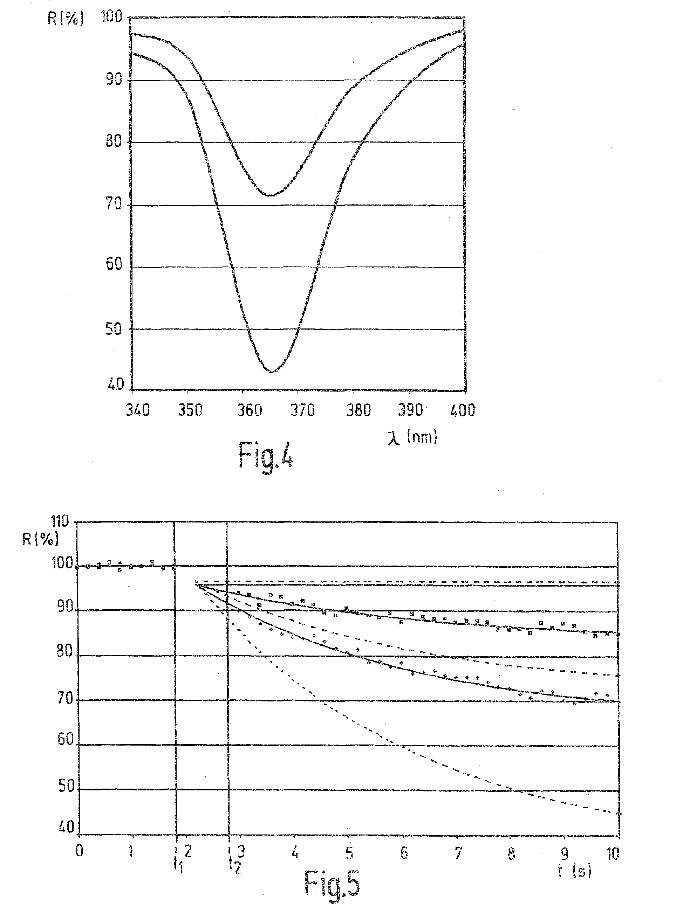

Fig. 4 zeigt eine grafische Darstellung von Absorptionsbanden des mit Blut benetzten Testfeldes bei zwei verschiedenen Glukosekonzentrationen. Dargestellt ist die diffuse Reflexion bzw. Remission R in Abhängigkeit von der Wellenlänge λ zu einem gegebenen Zeitpunkt nach dem Probenauftrag. Die obere Kurve zeigt den Spektralverlauf für eine Glukosekonzentration von 100 mg/dl und die untere Kurve für eine Glukosekonzentration von 300 mg/dl. Die beiden Messwellenlängen liegen bei 365nm und 375nm innerhalb des für den Nachweis des Analyten bzw. die Glukose-Konzentrationsbestimmung nutzbaren Absorptionsbereichs. Die Messwellenlängen sind dabei so gewählt, dass deutliche Remissionsunterschiede in der Absorptionsbande beobachtet werden, während das Übertragungsverhalten des optischen Übertragungssystems weitgehend unabhängig von der geringen Wellenlängendifferenz bleibt. Grundsätzlich ist es aber auch denkbar, dass eine Kontrollwellenlänge außerhalb der Absorptionsbande weit entfernt von der glukose- bzw. analytempfindlichen Messwellenlänge innerhalb der Absorptionsbande gewählt wird.

Fig. 5 zeigt die entsprechend dem Absorptionsspektrum nach Fig. 4 unter Verwendung eines Messsystems nach Fig. 2 gewonnenen zeitlichen Intensitätsverläufe für zwei Glukosekonzentrationen. In dem Diagramm dargestellt ist die auf 100% normierte Remission R über der Zeit t. Dabei wurde das anfänglich trockene Testfeld 20 zu einem Zeitpunkt t1 mit einer Blutprobe beladen und in Zeitintervallen von 200 ms paarweise nahezu zeitgleich bei zwei verschiedenen Messwellenlängen abgetastet. Aufgrund der erwähnten Messprobleme bei unvollständiger Benetzung und Reflektionsänderung sind in dem durch senkrechte Linien markierten Zeitbereich zwischen t1 und t2 keine gültigen Messwerte erhältlich. In dem Diagramm zeigen die Rautensymbole Messwerte bei 365nm und die Quadratsymbole bei 375nm für eine Glukosekonzentration von 100 mg/dl, während die durchgezogenen Kurven entsprechende Anpassungen an diese Werte darstellen. Für die zweite Glukosekonzentration von 300 mg/dl sind der besseren Übersichtlichkeit halber nur die angepassten Exponentialkurven gestrichelt dargestellt.

Im Folgenden wird der Messablauf und die Auswertung anhand des Diagramms gemäß Fig. 5 näher erläutert. Zunächst wird vor dem Aufbringen der Blutprobe aus den Messwerten im Zeitbereich zwischen 0 und t1 ein Trockenleerwert als Maß für das anfängliche Übertragungsverhalten des Übertragungssystems 18 erfasst bzw. ermittelt. Sofern bei dieser Plausibilitätsprüfung der Trockenleerwert von einem vorgegebenen Chargenwert beispielsweise um mehr als 10% abweicht, wird bereits ein Fehlerfall erkannt und der Messvorgang abgebrochen.

Sodann erfolgt der Probenauftrag und die intervallweise analytbezogene Messwertabtastung bei beiden Messwellenlängen bis zu einer Endzeit von beispielsweise 10s. Wie sich aus dem Diagramm nach Fig. 5 deutlich ergibt, kann aus dem Zeitverlauf der Messwerte bei den beiden Messwellenlängen ein Referenzwert für das Übertragungsverhalten des optischen Übertragungssystems zu einem Startzeitpunkt nach dem Aufbringen der Körperflüssigkeit extrapoliert werden. Dabei werden mittels eines Mikroprozessors der Messeinheit 16 mit vorgegebenen Funktionen Kurvenanpassungen und Extrapolationen durchgeführt. Der Referenzwert ist durch den Schnittpunkt der beiden Fitkurven bestimmt und in dem Diagramm durch eine horizontale Linie repräsentiert.

Sofern eine vorgegebene maximale Toleranzabweichung beispielsweise von 5% von dem Trockenleerwert unterschritten wird, kann der Referenzwert für eine Offsetkorrektur der Messwerte herangezogen werden. Der Intensitätsverlauf wird dann nicht mehr auf den Trockenleerwert, sondern auf den abgesenkten Referenzwert bezogen. Hierbei ist zu berücksichtigen, dass durch den Trocken-Nass-Übergang des Testfelds 20 ein Sprung im Remissionsverhalten auftritt, der hinreichend konstant sein sollte.

Wird hingegen eine zu hohe Differenz zwischen dem Trockenleerwert und dem Referenzwert festgestellt, kann auf ein fehlerhaftes Übertragungsverhalten des Übertragungssystems 18 geschlossen werden. In diesem Fall wird die Messung verworfen und eine Fehleranzeige ausgegeben.

Es versteht sich, dass aus dem Intensitätsverlauf bei nur einer Wellenlänge kein Rückschluss auf den Referenzwert im Zeitbereich zwischen t1 und t2 getroffen werden kann, da Veränderungen in der optischen Ankopplung und probenseitige Randbedingungen wie Hämatokritwert und Temperatur zu einer Remissionsveränderung führen können. Dies wird in dem Diagramm nach Fig. 5 auch ersichtlich aus dem gestrichelten Intensitätsverlauf für die höhere Glukosekonzentration von 300 mg/dl, bei der ein höherer Referenzwert erfasst wurde.

Um bei beiden Messwellenlängen gleichermaßen einwirkende Störungen zu berücksichtigen, kann durch Verhältnisbildung der in jeweils einem Messintervall gewonnenen Messwertpaare (R(365nm)*C)/(R(375nm)*C) ein Störfaktor C rechnerisch eliminiert werden.

Grundsätzlich ist es möglich, auf die Trockenleerwertmessung zu verzichten und für die Messwertkorrektur nur den Referenzwert zu berücksichtigen. Es können analytische Funktionen (z.B. Exponentialfunktionen oder Polynome) vorgegeben werden, deren Parameter den Messwerten angepasst werden, um daraus die Glukosekonzentration zu berechnen. Möglich ist es auch, Wertetabellen für verschiedene Glukosewerte vorzugeben und die beste Anpassung der Messwerte zu bestimmen. Die Tabellen- bzw. Parameterzuordnung kann durch chargenabhängig Codierung erfolgen. Die Temperatur des Messsystems kann zusätzlich erfasst und bei der Auswertung mit einbezogen werden. In jedem Fall sind die genaue Bestimmung des Startzeitpunktes und der zugehörigen optischen Messwerten wichtig für die genaue Bestimmung des Glukosewertes.

Denkbar ist es auch, dass eine der beiden Messwellenlängen so gewählt wird, dass die dort gewonnenen Kontrollsignale sensitiver auf Übertragungsstörungen reagieren als das eigentliche Messsignal bei der anderen Wellenlänge. Dabei kann das Übertragungsverhalten des optischen Übertragungssystems für die Messwellenlänge optimiert werden. Möglich ist es auch, neben der wellenlängenabhängigen Zustandsmessung weitere Signaleigenschaften heranzuziehen, insbesondere die Polarisation und/oder eine Impulsform der Ein- und Auskopplungssignale in das Übertragungssystem.

## Patentansprüche

1. Verfahren zur Untersuchung einer Körperflüssigkeit, insbesondere für eine Blutzuckerbestimmung, bei welchem ein Testelement (14) zum Einmalgebrauch in einem Testgerät (12) mit Körperflüssigkeit beaufschlagt wird und über ein optisches Übertragungssystem (18) an eine photometrische Messeinheit (16) optisch angekoppelt wird, wobei nach dem Aufbringen der Körperflüssigkeit ein zeitlicher Verlauf von Messwerten zum Nachweis eines Inhaltsstoffs der Körperflüssigkeit an dem Testelement (14) erfasst wird, **dadurch gekennzeichnet, dass** das Übertragungsverhalten des optischen Übertragungssystems (18) durch eine Messwerterfassung bei zwei verschiedenen Messwellenlängen kontrolliert wird, und dass aus einem wellenlängenabhängigen Vergleich der Messwerte ein Unterschied im Übertragungsverhalten des optischen Übertragungssystems (18) vor und nach dem Aufbringen der Körperflüssigkeit ermittelt wird.

2. Verfahren nach Anspruch 1, **dadurch gekennzeichnet, dass** nach Maßgabe des ermittelten Unterschieds eine Messwertkorrektur durchgeführt oder das Testergebnis verworfen wird.

3. Verfahren nach Anspruch 1 oder 2, **dadurch gekennzeichnet, dass** die beiden Messwellenlängen in einem für den Nachweis des Inhaltsstoffs nutzbaren Absorptionsbereich des Testelements (14) vorzugsweise nicht mehr als 50nm entfernt voneinander liegen.

4. Verfahren nach einem der Ansprüche 1 bis 3, **dadurch gekennzeichnet, dass** eine Messwellenlänge in einem für den Nachweis des Inhaltsstoffs nutzbaren Absorptionsbereich des Testelements (14) liegt und die andere Messwellenlänge außerhalb davon.

5. Verfahren nach einem der Ansprüche 1 bis 4, **dadurch gekennzeichnet, dass** durch eine Messung vor dem Aufbringen der Körperflüssigkeit auf das Testelement (14) ein Trockenleerwert als Maß für das anfängliche Übertragungsverhalten des optischen Übertragungssystems (18) erfasst wird.

6. Verfahren nach einem der Ansprüche 1 bis 5, **dadurch gekennzeichnet, dass** aus dem Zeitverlauf der Messwerte bei den beiden Messwellenlängen ein Referenzwert für das Übertragungsverhalten des optischen Übertragungssystems (18) zu einem Startzeitpunkt nach dem Aufbringen der Körperflüssigkeit extrapoliert wird.

7. Verfahren nach Anspruch 6, **dadurch gekennzeichnet, dass** der Referenzwert bei Unterschreiten einer vorgegebenen maximalen Toleranzabweichung von dem Trockenleerwert zur Offset-Korrektur der Messwerte herangezogen wird.

8. Verfahren nach einem der Ansprüche 1 bis 7, **dadurch gekennzeichnet, dass** die wellenlängenabhängig erfassten Messwerte vorzugsweise durch Verhältnisbildung miteinander korreliert werden, so dass bei beiden Messwellenlängen einwirkende Störungen eliminiert werden.

9. Verfahren nach einem der Ansprüche 1 bis 8, **dadurch gekennzeichnet, dass** die Messwerte über eine vorgegebene Messdauer intervallweise bei beiden Messwellenlängen im Wesentlichen zeitgleich erfasst werden.

10. Verfahren nach einem der Ansprüche 1 bis 9, **dadurch gekennzeichnet, dass** die Messwellenlängen durch Einstrahlung von spektral aufgelöstem Anregungslicht vorzugsweise mittels Leuchtdioden (36) definiert werden.

11. Verfahren nach einem der Ansprüche 1 bis 10, **dadurch gekennzeichnet, dass** im Zuge des Aufbringens der Körperflüssigkeit auf das Testelement (14) mindestens ein Teil des optischen Übertragungssystems (18) bewegt und/oder verformt wird.

12. Vorrichtung zur Untersuchung einer Körperflüssigkeit, insbesondere für eine Blutzuckerbestimmung, mit einem eine photometrische Messeinheit (16) aufweisenden, vorzugsweise tragbaren Testgerät (12) und einem über ein optisches Übertragungssystem (18) an die Messeinheit (16) ankoppelbaren Testelement (14), das für einen Einmaltest mit Körperflüssigkeit beaufschlagbar ist, **dadurch gekennzeichnet, dass** die Messeinheit (16) dazu eingerichtet ist, das Übertragungsverhalten des optischen Übertragungssystems (18) durch eine Messwerterfassung bei zwei verschiedenen Messwellenlängen zu kontrollieren und aus einem wellenlängenabhängigen Vergleich der Messwerte einen Unterschied im Übertragungsverhalten des optischen Übertragungssystems (18) vor und nach dem Aufbringen der Körperflüssigkeit zu ermitteln.

13. Vorrichtung nach Anspruch 12, **dadurch gekennzeichnet, dass** das optische Übertragungssystem (18) mindestens einen in dem Testgerät (12) und/oder in dem Testelement (14) integrierten Lichtleiter (22;30,34) umfasst.

14. Vorrichtung nach Anspruch 12 oder 13, **dadurch gekennzeichnet, dass** das optische Übertragungssystem (18) eine opto-mechanische Kopplungseinrichtung (26,32) zur geräteseitigen Halterung und optischen Ankopplung des Testelements (14) aufweist.

15. Vorrichtung nach einem der Ansprüche 12 bis 14, **dadurch gekennzeichnet, dass** die Messeinheit (16) einen als Doppelstrahler bei zwei Messwellenlängen emittierenden Lichtsender (28) aufweist, und dass ein Strahlkombinator(40) das von dem Lichtsender (28) vorzugsweise mittels zwei Leuchtdioden (36) ausgestrahlte Anregungslicht einheitlich bündelt.

## Claims

1. Method for analysing a body fluid, in particular for determining blood glucose in which body fluid is applied to a test element (14) for single-use in a test device (12) and the test element is optically coupled to a photometric measuring unit (16) by means of an optical transmission system (18), wherein a time course of measuring values is recorded after the body fluid has been applied in order to detect a component of the body fluid on the test element (14), **characterized in that** the transmission behaviour of the optical transmission system (18) is controlled by recording measuring values at two different measurement wavelengths and that a difference in the transmission behaviour of the optical transmission system (18) is determined before and after applying the body fluid from a wavelength-dependent comparison of the measuring values.

2. Method according to claim 1, **characterized in that** a correction of the measuring values is carried out or the test result is rejected depending on the difference that is determined.

3. Method according to claim 1 or 2, **characterized in that** the two measurement wavelengths are preferably not more than 50 nm away from each other in an absorption range of the test element (14) that is usable for the detection of the component.

4. Method according to one of the claims 1 to 3, **characterized in that** one measurement wavelength is in an absorption range of the test element (14) that is usable for detecting the component and the other measurement wavelength lies outside thereof.

5. Method according to one of the claims 1 to 4, **characterized in that** a dry blank value is recorded by a measurement before the body fluid is applied to the test element (14) as a measure for the initial transmission behaviour of the optical transmission system (18).

6. Method according to one of the claims 1 to 5, **characterized in that** a reference value for the transmission behaviour of the optical transmission system (18) is extrapolated from the time course of the measuring values at the two measurement wavelengths to a starting time after application of the body fluid.

7. Method according to claim 6, **characterized in that** the reference value is used as an offset correction of the measuring values when it is below a predetermined maximum tolerance deviation from the dry blank value.

8. Method according to one of the claims 1 to 7, **characterized in that** the measuring values recorded in a wavelength-dependent manner are correlated to one another preferably by calculating ratios so that interferences having an effect at both measurement wavelengths are eliminated.

9. Method according to one of the claims 1 to 8, **characterized in that** the measurement values are recorded essentially simultaneously at the two measurement wavelengths at time intervals over a predetermined measurement period.

10. Method according to one of the claims 1 to 9, **characterized in that** the measurement wavelengths are defined by irradiating spectrally resolved excitation light preferably by means of light-emitting diodes (36).

11. Method according to one of the claims 1 to 10, **characterized in that** at least a part of the optical transmission system (18) is moved and/or deformed in the course of applying the body fluid to the test element (14).

12. Device for analysing a body fluid, in particular for blood glucose determination, comprising a preferably portable test device (12) having a photometric measuring unit (16) and a test element (14) that can be coupled to the measuring unit (16) by means of an optical transmission system (18), where body fluid can be applied to the said test element for a single-use test, **characterized in that** the measuring unit (16) is configured such that the transmission behaviour of the optical transmission system (18) can be controlled by recording measuring values at two different measurement wavelengths and a difference in the transmission behaviour of the optical transmission system (18) can be determined before and after applying the body fluid from a wavelength-dependent comparison of the measuring values.

13. Device according to claim 12, **characterized in that** the optical transmission system (18) comprises at least one light guide (22; 30, 34) integrated into the test device (12) and/or into the test element (14).

14. Device according to claim 12 or 13, **characterized in that** the optical transmission system (18) has an opto-mechanical coupling device (26, 32) to hold the test element and at the same time to optically couple the test element (14).

15. Device according to one of the claims 12 to 14, **characterized in that** the measuring unit (16) has a light emitter (28) emitting at two measurement wavelengths as a dual emitter, and that a beam combiner (40) uniformly focuses the excitation light irradiated from the light emitter (28) preferably by two light-emitting diodes (36).

## Revendications

1. Procédé d'examen d'un liquide corporel, en particulier pour une détermination de glycémie, dans lequel un élément de test (14) destiné à un usage unique dans un appareil de test (12) est alimenté avec du liquide corporel et est couplé optiquement, par l'intermédiaire d'un système de transmission optique (18), à une unité de mesure photométrique (16), une variation dans le temps de valeurs mesurées pour la détection d'un constituant du liquide corporel étant détectée l'élément de test (14) après l'application du liquide corporel, **caractérisé en ce que** le comportement de transmission du système de transmission optique (18) est contrôlé par une détection de valeurs mesurées à deux longueurs d'onde de mesure différentes, et **en ce qu'**à partir d'une comparaison de valeurs mesurées dépendante de la longueur d'onde, une différence dans le comportement de transmission du système de transmission optique (18) avant et après l'application du liquide corporel est déterminée.

2. Procédé selon la revendication 1, **caractérisé en ce que** selon la différence obtenue, une correction des valeurs mesurées est opérée ou le résultat de test est rejeté.

3. Procédé selon la revendication 1 ou 2, **caractérisé en ce que** les deux longueurs d'onde de mesure ne sont pas éloignées de plus de 50 nm l'une de l'autre dans une plage d'absorption utilisable pour la détection du constituant de l'élément de test (14).

4. Procédé selon l'une des revendications 1 à 3, **caractérisé en ce que** l'une des longueurs d'onde de mesure est située dans une plage d'absorption utilisable pour la détection du constituant de l'élément de test (14) et l'autre est située en dehors de celle-ci.

5. Procédé selon l'une des revendications 1 à 4, **caractérisé en ce qu**'une mesure effectuée avant l'application du liquide corporel sur l'élément de test (14) permet de déterminer une valeur à blanc sans liquide servant de mesure pour le comportement initial de transmission du système de transmission optique (18).

6. Procédé selon l'une des revendications 1 à 5, **caractérisé en ce que** de la variation dans le temps des valeurs mesurées aux deux longueurs d'onde de mesure, est extrapolée une valeur de référence pour le comportement de transmission du système de transmission optique (18) à un instant de démarrage après l'application du liquide corporel.

7. Procédé selon la revendication 6, **caractérisé en ce que** la valeur de référence, lorsqu'elle est en dessous d'une tolérance maximale prédéfinie, est utilisée par la valeur à blanc sans liquide pour la correction de décalage des valeurs mesurées.

8. Procédé selon l'une des revendications 1 à 7, **caractérisé en ce que** les valeurs mesurées dépendantes de la longueur d'onde sont corrélées entre elles, de préférence en formant le rapport entre elles, de manière à éliminer les interférences s'exerçant aux deux longueurs d'onde.

9. Procédé selon l'une des revendications 1 à 8, **caractérisé en ce que** les valeurs mesurées sont détectées pendant une durée prédéterminée par intervalles aux deux longueurs d'onde de mesure sensiblement en même temps.

10. Procédé selon l'une des revendications 1 à 9, **caractérisé en ce que** les longueurs d'onde de mesure sont définies par le rayonnement d'une lumière d'excitation à résolution spectrale émis de préférence au moyen de diodes électroluminescentes (36).

11. Procédé selon l'une des revendications 1 à 10, **caractérisé en ce qu**'au cours de l'application du liquide corporel sur l'élément de test (14), au moins une partie du système de transmission optique (18) est déplacée et/ou déformée.

12. Dispositif d'examen d'un liquide corporel, en particulier pour une détermination de glycémie, avec un appareil de test (12) de préférence portable comportant une unité de mesure photométrique (16), et avec un élément de test (14) pouvant être couplé à ladite unité de mesure photométrique (16) par l'intermédiaire d'un système de transmission optique (18), lequel élément de test (14) peut être alimenté avec du liquide corporel pour un test unique, **caractérisé en ce que** l'unité de mesure (16) est configurée pour contrôler le comportement de transmission du système de transmission optique (18) par une détection de valeurs mesurées à deux longueurs d'onde de mesure différentes, et pour déterminer à partir d'une comparaison dépendante de la longueur d'onde des valeurs mesurées une différence dans le comportement de transmission du système de transmission optique (18) avant et après l'application du liquide corporel.

13. Dispositif selon la revendication 12, **caractérisé en ce que** le système de transmission optique (18) comprend au moins un conducteur de lumière (22 ; 30, 34) intégré dans l'appareil de test (12) et/ou dans l'élément de test (14).

14. Dispositif selon la revendication 12 ou 13, **caractérisé en ce que** le système de transmission optique (18) comporte un moyen de couplage opto-mécanique (26, 32) pour le support côté appareil et le couplage optique de l'élément de test (14).

15. Dispositif selon l'une des revendications 12 à 14, **caractérisé en ce que** l'unité de mesure (16) comporte un émetteur de lumière (28) à double faisceau émettant à deux longueurs d'onde de mesure, et **en ce qu'**un combinateur de faisceaux (40) concentre uniformément la lumière d'excitation émise par l'émetteur de lumière (28) de préférence au moyen de deux diodes électroluminescentes (36).
